Europäisches Patentamt

European Patent Office

Office européen des brevets

(19)

(11) Numéro de publication: **0 267 103**
**B1**

(12) FASCICULE DE BREVET EUROPEEN

(45) Date de publication du fascicule du brevet:
13.06.90

(51) Int. Cl.⁵: **G06F 13/24**

(21) Numéro de dépôt: **87402417.7**

(22) Date de dépôt: **27.10.87**

(54) Dispositif d'antiparasitage des lignes d'interruption d'un microprocesseur.

(30) Priorité: **31.10.86 FR 8615174**

(43) Date de publication de la demande:
**11.05.88 Bulletin 88/19**

(45) Mention de la délivrance du brevet:
**13.06.90 Bulletin 90/24**

(84) Etats contractants désignés:
**DE ES GB IT**

(56) Documents cités:
**EP-A- 0 199 221**
**GB-A- 2 072 881**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Jousselin, Jean-Marc, 135, rue Danton,**
**F-92500 Rueil-Malmaison(FR)**

## Description

La présente invention concerne un dispositif d'antiparasitage de la ligne d'interruption d'un microprocesseur.

Lorsque des événements devant se produire et interrompre le déroulement normal du programme d'un microprocesseur arrivent sur une ou plusieurs entrées de ce microprocesseur, ces événements risquent de ne pas être pris en compte s'ils se produisent entre deux scrutations programmées de ces entrées par le microprocesseur.

Une solution actuelle consiste à utiliser une entrée dite d'interruption prévue sur le microprocesseur. Lorsqu'un signal arrive sur cette entrée, le microprocesseur interrompt son programme. Lorsque plusieurs événements doivent arriver et interrompre le programme, il est alors nécessaire d'utiliser un dispositif dit contrôleur d'interruptions.

Le contrôleur d'interruptions est un organe périphérique d'un microprocesseur, programmable et destiné à envoyer à ce dernier des ordres d'interruption au moment de l'arrivée de certains événements sur ses propres entrées.

Un inconvénient d'un contrôleur d'interruptions, relié au microprocesseur par sa seule entrée d'interruption est qu'un parasite en entrée du contrôleur peut interrompre le programme du microprocesseur au même titre qu'un événement.

Pour pallier cet inconvénient, l'invention propose un dispositif d'antiparasitage de la ligne d'interruption d'un microprocesseur, comportant un contrôleur d'interruptions relié au microprocesseur et caractérisé en ce que les entrées du contrôleur d'interruptions, sur lesquelles arivent les signaux destinés à interrompre le déroulement du programme du microprocesseur, sont directement connectées aux entrées du microprocesseur et en ce que le sous-programme d'interruption du microprocesseur comporte une première étape de lecture de ses entrées, une seconde étape de comparaison de la durée des impulsions du signal avec un seuil minimum, destinée à la reconnaissance des parasites avant une troisième étape de décision de la poursuite du sous-programme lui-même en cas de signal réel d'interruption ou de reprise du programme principal en cas de parasite.

Grâce à ce dispositif, les événements qui surviennent obligent le microprocesseur à scruter ses entrées et permettent d'éviter la prise en compte des parasites.

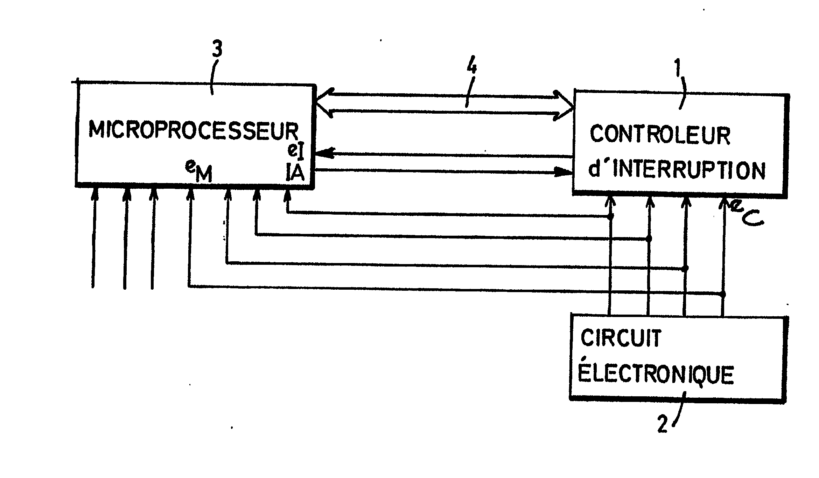

D'autres avantages apparaîtront dans la description qui suit illustrée par la figure unique représentant le dispositif selon l'invention.

Comme cela a été dit précédemment, un contrôleur d'interruption est un circuit d'interface programmable entre un microprocesseur et un circuit électronique. Si un élément du circuit électronique envoie au contrôleur un signal, sous forme d'impulsions, correspondant à un événement, le contrôleur envoie au microprocesseur un signal d'interruption par l'intermédiaire de son entrée d'interruption. Mais, si un parasite qui se présente également sous la forme d'une impulsion apparaît sur une entrée du contrôleur, celui-ci va envoyer de la même façon un signal d'interruption au microprocesseur. Dans ce cas, le déroulement du programme aura été inutilement interrompu.

Sur la figure unique est représenté le dispositif (selon l'invention) qui a pour but d'éviter la prise en compte inutile des parasites. Pour cela, il comporte un contrôleur d'interruption 1 dont les entrées e $_C$ sont reliées à un circuit électronique 2. Ce contrôleur est associé à un microprocesseur 3, à la fois par son entrée d'interuption e $_I$ et par ses entrées classiques e $_M$. En effet, les entrées e $_C$ du contrôleur sont directement connectées à certaines entrées e $_M$ du microprocesseur.

Le fonctionnement du dispositif est le suivant: quand un événement provenant du circuit électronique 2 arrive sur une des entrées e $_C$ du contrôleur d'interruption 1, celui-ci envoie un signal de demande d'interruption au microprocesseur 3, par l'intermédiaire de son entrée d'interruption e $_I$. Le microprocesseur 3 envoie à son tour un signal au contrôleur, par sa sortie "IA" dite de reconnaissance d'interruptions pour lui signaler qu'il a bien reçu l'ordre d'interrompre son programme. Ensuite, le contrôleur 1 lui indique quel sous-programme d'interruption il doit faire, par l'intermédiaire du bus d'adresse 4. Selon l'invention, ce sous-programme comporte tout d'abord la lecture de l'entrée du microprocesseur 3 correspondant à l'entrée du contrôleur d'interruption 1 ayant reçu un signal du circuit électronique 2, et la détermination de la nature de ce signal.

Cette détermination consiste en une comparaison de la durée des impulsions avec un seuil minimum. En effet, un parasite qui est une perturbation aléatoire sur la ligne de transmission se présente sous forme d'impulsions de courte durée, inférieure à la durée des impulsions caractérisant n'importe quel signal. Lorsque le microprocesseur a reconnu le signal, soit il reprend le déroulement du programme en cas de parasites, soit dans le cas contraire, il exécute le sous-programme indiqué par le contrôleur d'interruption.

Une application intéressante de ce dispositif est réalisée dans un dispositif électronique de commande de la position d'un siège de véhicule. En effet, pour offrir à chaque conducteur de véhicule sa position de conduite idéale en fonction de la longueur de ses différents segments corporels, il existe un siège conçu par la Demanderesse comportant cinq réglages électrifiés :
- longitudinal,
- hauteur de l'avant du coussin d'assise,
- hauteur de l'arrière du coussin d'assise,
- inclinaison globale du dossier,
- inclinaison de la partie supérieure de dossier.

Un mini-siège, situé sur le côté de l'assise, regroupe les commandes assurant le pilotage de ces différentes fonctions. Un microprocesseur mémorise plusieurs combinaisons de réglages, permettant à plusieurs utilisateurs du même véhicule de retrouver instantanément leur position de conduite, celle-ci pouvant être rappelée soit depuis le poste de conduite, soit à distance grâce à des télécommandes à infrarouge individualisées. Associés aux moteurs du siège, des capteurs de position repèrent les positions du siège et envoient des impulsions au microprocesseur, de façon asynchrone, par l'intermédiaire d'un contrôleur d'interruptions. Le dispositif d'antiparasitage de la ligne d'interruption d'un microprocesseur, selon l'invention, est particulièrement utile dans ce cas, car il évite la prise en compte de parasites pouvant nuire au fonctionnement du siège.

## Revendications

1. Dispositif d'antiparasitage de la ligne d'interruption d'un microprocesseur, comportant un contrôleur d'interruptions relié au microprocesseur, caractérisé en ce que les entrées (e $_C$) du contrôleur (1), sur lesquelles arrivent les signaux destinés à interrompre le déroulement du programme du microprocesseur (3), sont directement connectées aux entrées (e $_M$) du microprocesseur (3) et en ce que le sous-programme d'interruption du microprocesseur comporte une première étape de lecture de ses entrées (e $_M$), une seconde étape de comparaison de la durée des impulsions du signal avec un seuil minimum, destinée à la reconnaissance des parasites avant une troisième étape de décision de la poursuite du sous-programme lui-même en cas de signal réel d'interuption ou de reprise du programme principal en cas des parasite.

## Patentansprüche

Einrichtung zur Störungsbeseitigung der Unterbrecherleitung eines Mikrorechners, mit einer mit dem Mikrorechner verbundenen Unterbrecherschaltung, dadurch gekennzeichnet, daß die Eingänge (e $_C$) der Schaltung (1), an denen die Signale ankommen zur Unterbrechung des Programmablaufs des Mikrorechners (3), direkt mit den Eingängen (e $_M$) des Mikrorechners (3) verbunden sind und daß das Unterbrechungs-Unterprogramm des Mikrorechners eine erste Lesestufe für diese Eingänge (e $_M$) aufweist, eine zweite Vergleichsstufe für die Impulsdauer des Signals mit einer Minimalschwelle, zum Erkennen von Störungen, vor einer dritten Stufe, welche entscheidet, ob das Unterprogramm fortgesetzt wird im Falle einer tatsächlichen Unterbrechung oder ob das Hauptprogramm fortgesetzt wird im Falle einer Störung.

## Claims

1. A suppression arrangement for the interrupt line of a microprocessor comprising an interrupt controller connected to the microprocessor characterised in that the inputs (e $_C$) of the controller (1), at which the signals which are intended to interrupt execution of the program of the microprocessor (3) arrive, are directly connected to the inputs (e $_M$) of the microprocessor (3) and that the microprocessor interrupt subprogram comprises a first step of reading of the inputs (e $_M$) thereof, a second step of comparing the duration of the pulses of the signal to a minimum threshold, being intended for recognition of the noise phenomena prior to a third step of deciding on continuation with the sub-program itself in the case of a real interrupt signal or resumption of the main program in the event of noise.

EP 0 267 103 B1

CONTROLEUR d'INTERRUPTION

CIRCUIT ÉLECTRONIQUE

MICROPROCESSEUR